# EUROPEAN PATENT SPECIFICATION

(11) **EP 4 273 538 B1**
(45) Date of publication and mention of the grant of the patent: **25.12.2024**
(21) Application number: 22171523.8
(22) Date of filing: 04.05.2022
(51) Int. Cl.: G01N 29/032, G01N 29/036, G01N 29/44, G01N 29/48

(54) **METHOD FOR DETERMINING A PHYSICAL PARAMETER OF A FLUID IN A PIPE-FLUID SYSTEM**
VERFAHREN ZUR BESTIMMUNG EINES PHYSISCHEN PARAMETERS EINES FLUIDS IN EINEM ROHRLEITUNGSSYSTEM
PROCÉDÉ DE DÉTERMINATION D'UN PARAMÈTRE PHYSIQUE D'UN FLUIDE DANS UN SYSTÈME TUYAUTERIE-FLUIDE

(43) Date of publication of application: 08.11.2023
(73) Proprietor: ABB SCHWEIZ AG, 5400 Baden (CH)
(72) Inventor: SZASZ, Paul, 68723 Plankstadt (DE); MIGUNOV, Vadim, 68526 Ladenburg (DE)
(74) Representative: Maiwald GmbH

(56) References cited:
- US-B1- 6 301 973
- TARANENKO PAVEL ET AL: "Development of a Digital Twin of the Mechanical Part of Coriolis Flowmeters Based on Frequency Response Functions", 2018 GLOBAL SMART INDUSTRY CONFERENCE (GLOSIC), IEEE, 13 November 2018 (2018-11-13), pages 1 - 6, XP033469829, DOI: 10.1109/GLOSIC.2018.8570072
- EL-SINAWI AMEEN H ET AL: "On modeling the dynamics of pipelines: Finite element approach", 2015 6TH INTERNATIONAL CONFERENCE ON MODELING, SIMULATION, AND APPLIED OPTIMIZATION (ICMSAO), IEEE, 27 May 2015 (2015-05-27), pages 1 - 3, XP033170945, DOI: 10.1109/ICMSAO.2015.7152238

## Description

### Field of the Invention

The invention relates to the field of determining a physical parameter of a fluid, particularly in a pipe-fluid system. The invention further relates to a vibration measurement system, to a program element, to a computer-readable storage medium, and to a use.

### Background

Many methods and devices have been developed so far to extract various physical parameters of a process fluid in industrial pipelines by means of a vibration frequency spectrum of the pipe or pipeline. However, it turned out that selecting a best-suited frequency out of the full vibration frequency spectrum is crucial for determining a physical parameter of a fluid with good precision, particularly because not all vibration modes are equally sensitive to any selected physical parameter of the fluid.

Document US 6,301,973 B1 relates to apparatus and methods for non-intrusive measurements of internal pressure and/or other measurements and to hoop-mode and bending-mode resonance vibration of a tubular section for determining internal pressure and/or other measurements.

The paper "Taranenko; et al.: Development of a Digital Twin of the Mechanical Part of Coriolis Flowmeters Based on Frequency Response Functions. 2018 Global Smart Industry Conference (GLDSIC), IEEE, 13 November 2018" relates to a mathematical model of a Coriolis flowmeter based on frequency response functions available from experiments.

The paper "El-Sinawi; et al.: On modeling the dynamics of pipelines: Finite element approach. 2015 6th International Conference On Modeling, Simulation, And Applied

Optimization (ICMSAO), IEEE, 27 May 2015" relates to a finite element model of a pipeline, one model with a solid element, and another with a pipe element.

### Description

It is an objective of the invention to provide an improved method for determining a physical parameter of a fluid. This objective is achieved by the subject-matter of the independent claims. Further embodiments are evident from the dependent claims and the following description.

One aspect relates to a method for determining a physical parameter of a fluid in a section of a pipe-fluid system, wherein the pipe-fluid system comprises a pipe configured to be filled with the fluid. The method comprises the steps of:
selecting the section of the pipe-fluid system, the section being delimited by a pair of stiff delimiters;
performing a numerical vibration simulation of the section of the pipe, resulting in a computed Eigen-frequency range of computed maxima of the pipe-fluid system; inducing, by an excitation means, a first vibration of the section;
acquiring, by at least two vibration measurement devices, a set of first maxima in an amplitude-frequency diagram, with a first frequency within the computed Eigen-frequency range;
selecting, by means of a vibration mode analysis, a first hoop mode maximum out of the set of first maxima;
inducing, by the excitation means, a second vibration of the section;
acquiring, by the at least two vibration measurement devices, a set of second maxima in the amplitude-frequency diagram, with a second frequency within the computed Eigen-frequency range;
selecting, by means of vibration mode analysis, a second hoop mode maximum out of the set of second maxima;
deriving the physical parameter of the fluid from a difference between the first hoop mode maximum and the second hoop mode maximum.

The physical parameter of the fluid may be, e.g., pressure, a viscosity and/or a density of the fluid. The fluid may be any material, which can be transported in a pipeline or pipe. Examples may comprise a liquid, a suspension, and/or a gas, for instance a liquefied gas. The pipe-fluid system comprises a pipe that is configured to be filled with said fluid. The pipe may comprise any material, which is able to vibrate as response to a single stimulus. The stimulus may be given by punching with a hammer, any other tool or with a knuckle on the pipe. The tool to be used may comprise a tool with defined force-impact on the pipe. The section of the pipe-fluid system may be a section of the pipe that is delimited by rigid means, such as a clamp or a flange, on each side of the section. The length of the section may be determined by the dimensions of the pipe. Selecting the section of the pipe-fluid system may comprise to build and/or to use a section of the pipe-fluid system that is delimited by a pair of stiff delimiters. The pipe may be filled essentially completely with the fluid in the selected section.

The numerical vibration simulation of the section of the pipe may comprise an analytical or an FEM-based (Finite Element Method) simulation of the selected section. The vibration simulation of the pipe-fluid system may take into account both physical properties of the pipe and physical properties of the fluid. The vibration simulation may be the simulation of a response to one single stimulus, for example to one single punch with a hammer on the pipe section. The response-frequency or resonant frequency to one single stimulus is often called the Eigen-frequency of the pipe-fluid system. The vibration simulation may result in an amplitude-frequency diagram, i.e. a diagram that shows frequencies of the vibrating section on an x-axis of the diagram and amplitudes on a y-axis of the diagram. Hence, computed maxima in the amplitude-frequency diagram are peaks in the diagram with an amplitude as y-value and a frequency as x-value. The vibration simulation of the pipe-fluid system may result in a computed Eigen-frequency value that may differ, particularly differ between 0 % and 10 %, e.g. between 0 % and 5 %, from the actual Eigen-frequency of the respective real pipe-fluid system. Thus, the computed Eigen-frequency is rather handled as a range, within which the vibration mode correlated to the envisaged fluid property is expected. The "range" may take into account, for example, variations of the fluid, e.g. variations of its pressure, viscosity and/or density, variations of the pipe, e.g. caused by temperature fluctuations, precision deficiencies of the simulation and/or of the section's model and/or further sources of imprecision.

In other words, for determining a fluid property change from the vibrations of an arbitrary pipe-fluid system with a clamp-on method, the frequency of the vibration mode, which is known to be sensitive to the considered physical property, can be determined by appropriate model calculations. Its accuracy is typically within a range of a few percent of the determined physical property, e.g. within a frequency interval of 5 - 10 %. This prediction may also be used to identify the relevant mode in a real vibration spectrum. However, the actual frequency of any predicted mode typically deviates slightly from the predicted value due to tolerances in dimensions and material data, so that in some cases several frequencies can be found within the predicted frequency interval. Hence, the method disclosed provides a means to select the envisaged vibration mode frequency from a multitude of Eigen-frequencies within the predicted frequency interval, which may result in a correlation between frequency change and fluid property change.

After the simulation - alternatively parallel to it, or even before it - some "real-world reference values" of the section of the pipe-fluid system may be captured. For this, a first vibration of the section is induced, by an excitation means, e.g. by one punch of a hammer, a solenoid system or other excitation means. The response of the section is acquired by at least two vibration measurement devices. The at least two vibration measurement devices may be arranged in a defined way, particularly to be able to determine vibration modes, i.e. hoop mode or bending mode of a maximum. Particularly, at least two vibration measurement devices (e.g. accelerometers) may be used to discriminate different modes within a pre-defined frequency interval.

The acquiring may result in a set of first maxima in an amplitude-frequency diagram, with a first frequency within the Eigen-frequency range. The set of first maxima may comprise one maximum only or several maxima; at least for some pipe-fluid systems, the latter may be the regular case. Hence, by limiting the maxima of the full vibration frequency spectrum to only the set of first maxima within the Eigen-frequency range already improves the method for determining a physical parameter of a fluid, by thus selecting a best-suited frequency, or at least only few of them (i.e. the set of first maxima).

For an even more sophisticated selection of the best-suited frequency, a vibration mode analysis is performed. The vibration mode analysis may differentiate bending mode maxima from hoop mode maxima. Particularly, bending mode maxima have essentially the same amplitude and the same phase measured by the at least two vibration measurement devices. In contrast, hoop mode maxima may have essentially the same amplitude, but a significantly different phase measured by the at least two vibration measurement devices.

In numerous experiments, it turned out that using a hoop mode maximum is better suited for determining at least some physical parameters of a fluid in a pipe-fluid system, for instance for determining a pressure, a viscosity and/or a density of the fluid.

For determining these kind of parameters, the bending mode maxima are discarded and only the first hoop mode maximum, out of the set of first maxima, is used. The first hoop mode maximum may, then, be used as a reference value for the analysis.

It should be noted that, particularly for other kind of physical parameters - for instance for determining a flow of the fluid -, bending mode maxima may be used instead of the hoop mode maxima. Consequently, in these cases the hoop mode maxima are discarded.

After these "preparing steps" - which may be performed rarely, in some cases only once - the "productive steps" may be entered, which need to be done to get the at least one physical parameter of the fluid, e.g. on a regular basis.

For this, a second vibration of the section is induced by the excitation means. Then, as a response, a set of second maxima is acquired by the at least two vibration measurement devices, with a second frequency - of each one of the maxima - within the Eigen-frequency range. From this set of second maxima a second hoop mode maximum is selected, by means of vibration mode analysis. The inducing, the acquiring and the selecting may be done in an analogous way as for capturing the first hoop mode maximum.

Having the first hoop mode maximum as reference value and the second hoop mode maximum as an indicator of the current state of the section of the pipe-fluid system, the at least one physical parameter of the fluid can be derived from a difference between the first hoop mode maximum and the second hoop mode maximum. Methods for deriving the physical parameter of the fluid and/or for converting the change of the frequency into a change of fluid physical property, are described, e.g., in "Y.C.Fung: On the vibration of Thin Cylindrical Shells", Report No AM 5-8, October 14, 1955. The Ramo-Wooldrige Corporation, Guided Missile Research Division".

This method improves significantly a non-invasive measurement of at least one physical parameter of a fluid in a pipe-fluid system. Particularly, it improves the selection of the vibration frequency that is to be used for this kind of measurement.

Hence, changes of the physical property of the fluid in the pipe can be measured with low effort and high precision. Moreover, besides the physical parameters also local disturbances in the pipe may be measured, and/or alarms may be output, based on situations that may be recognized a critical for the fluid and/or for the pipe.

In various embodiments, the physical parameter is a pressure, a viscosity and/or a density of the fluid. This enables a continuous monitoring of fluids of the pipe, without a need of opening the pipe or mounting sensors within the pipe.

In various embodiments, the method comprises following alternative steps:
selecting, by means of a vibration mode analysis, a first bending mode maximum out of the set of first maxima; and
selecting, by means of vibration mode analysis, a second bending mode maximum out of the set of second maxima.

For determining a different kind of physical parameters, for instance for determining a flow of the fluid, these steps may substitute the respective "selecting" steps (which are to select the hoop mode maximum).

In various embodiments, the fluid is a liquid, a suspension, and/or a gas. Hence, a broad variety of material types can be measured or monitored by this method.

In various embodiments, the at least two vibration measurement devices are arranged at an outer surface of the pipe, along one line axially parallel to the pipe, and/or along one line radially circumferential to the pipe. The arrangement turned out to be particularly advantageous for both measuring Eigen-frequencies of the pipe-fluid system and for differentiating hoop mode maxima from bending mode maxima.

In various embodiments, the at least two vibration measurement devices are configured for the vibration mode analysis, particularly for classifying a first or a second maximum acquired, i.e. measured by the vibration measurement devices, either as a bending mode maximum or as a hoop mode maximum.

Further combinations, e.g. by using three sensors on a circumference of the pipe, may provide further measurement precision, e.g. by eliminating bending mode maxima, and/or by differentiating even and uneven hoop mode numbers ("n-numbers").

In some embodiments, the vibration mode analysis is achieved by comparing a magnitude (particularly an amplitude or phase of the specific mode in the time domain).

In various embodiments, the pipe comprises or consists of metal. Pipes of metal or quite widespread and their behaviour is well-known to skilled persons. In addition, many libraries - e.g. software libraries, material data sheets or material property databases - that describe their properties are available. Alternatively, the pipe may comprise or consist of another material that is able to vibrate as response to a single stimulus, e.g. by a hammer or coil system.

In some embodiments, the pipe has a diameter between 2 cm and 150 cm, and/or has a wall thickness between 2 mm and 50 mm. These are the most widespread embodiments of pipes. However, the method described here may not be limited to these dimensions.

In some embodiments, the stiff delimiter is designed as a flange or a clamp. Alternatively, the delimiter may be any entity that fixes the pipe at the two ends of the section of interest.

In various embodiments, the excitation means is designed as a hammer, a solenoid-driven coil, and/or further excitation means. At least some vibration measurement device may be able to measure also vibrations excited by other means, e.g. by knocking with a knuckle, and/or using hammer-type tools of any material.

In various embodiments, the vibration measurement device is at least one of: an accelerometer, any kind of a microphone, an optical sensor, and/or a strain gauge. The vibration measurement device may be fixed at the pipe, and/or measured from a distance, e.g. by a laser device.

An aspect relates to a vibration measurement system configured for determining a physical parameter of a fluid in a pipe-fluid system. The vibration measurement system comprises:
an excitation means, configured for inducing a vibration in a section of the pipe-fluid system;
at least two vibration measurement devices, configured for acquiring), from the section of the pipe-fluid system, first maxima and second maxima in an amplitude-frequency diagram; and
an evaluation device, configured for executing at least some of the steps of a method of any one of the preceding claims for determining the physical parameter of the fluid.

An aspect relates to a computer program product comprising instructions, which, when the program is executed by an evaluation device, cause the computer to carry out the method as described above and/or below.

An aspect relates to a computer-readable storage medium where a computer program or a computer program product as described above is stored on.

An aspect relates to a use of a vibration measurement system described above and/or below for determining a physical parameter of a fluid in a pipe-fluid system, particularly for determining a pressure, a viscosity and/or a density of the fluid.

For further clarification, the invention is described by means of embodiments shown in the figures. These embodiments are to be considered as examples only, but not as limiting.

### Brief Description of the Drawings

The drawings depict:
- **Fig. 1**: schematically a vibration measurement system and a pipe-fluid system according to an embodiment;
- **Fig. 2a, 2b**: schematically hoop modes of a pipe-fluid system according to an embodiment;
- **Fig. 3**: schematically bending modes of a pipe-fluid system according to an embodiment;
- **Fig. 4**: schematically an amplitude-frequency diagram according to an embodiment;
- **Fig. 5a** to **5c**: schematically pipe-fluid systems with vibration measurement devices according to an embodiment;
- **Fig. 6a**: schematically a pipe-fluid system with vibration measurement devices according to an embodiment;
- **Fig. 6b**: schematically hoop modes of a pipe-fluid system according to an embodiment;
- **Fig. 7**: a flow diagram according to an embodiment.

### Detailed Description of Embodiments

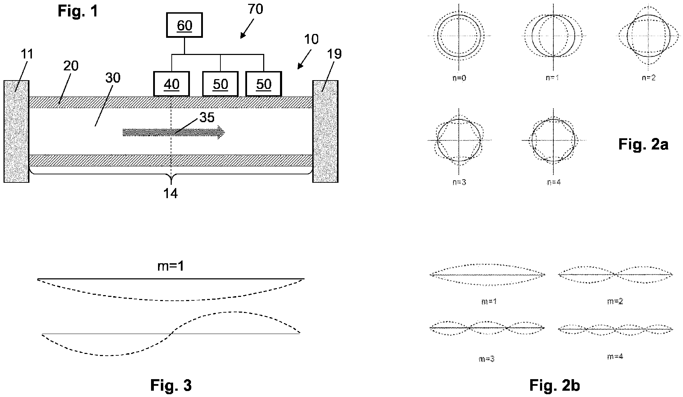

**Fig. 1** shows schematically a vibration measurement system 70 and a pipe-fluid system 10 according to an embodiment. The pipe-fluid system 10 comprises a pipe 20 with fluid 30. The fluid 30 may be steady or flow in a direction marked by arrow 35. The pipe-fluid system 10 is delimited by a pair of delimiters 11 and 19, e.g. by clamps, flanges and/or other delimiting means, thus building a section 14.

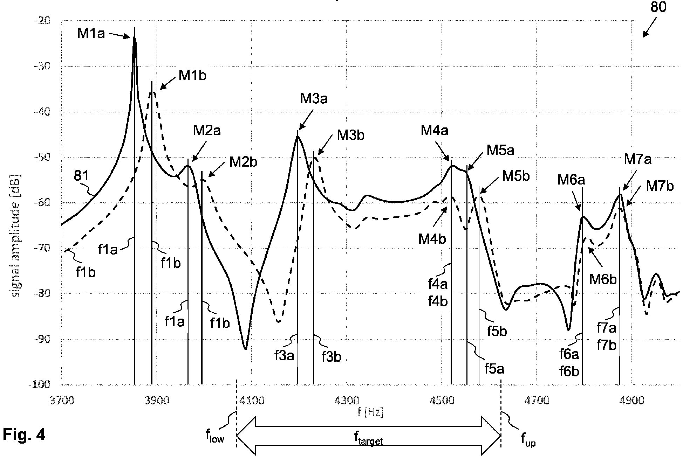

The vibration measurement system 70 configured for determining a physical parameter of a fluid in the pipe-fluid system 10, particularly in section 14. The vibration measurement system 70 comprises an excitation means 40, e.g. a hammer. The excitation means 40 may be fixed (not shown) on one of the delimiters 11 and 19. The excitation means is configured for inducing a vibration in the section 14. Additionally, the vibration measurement system 70 comprises at least two vibration measurement devices 50. The vibration measurement devices 50 may be mounted on an outside of the pipe 20, and/or comprise distant measurement means (not shown), for example a laser sensor. The vibration measurement devices 50 are configured for acquiring responses of a punch by means of the excitation means 40. The responses may be depicted as an amplitude-frequency diagram; see e.g. **Fig. 4****.** Further, the vibration measurement system 70 comprises an evaluation device 60. The evaluation device 60 may control the excitation means 40 and/or the vibration measurement devices 50. Besides, the evaluation device 60 may be configured for executing at least some of the steps of a method as described above and/or below, particularly for determining at least one physical parameter of the fluid 30.

**Figs. 2a and 2b** show schematically radial and axial deformation shapes of hoop modes of a vibrating pipe-fluid system 10 (see, e.g., **Fig. 1**) according to an embodiment. **Fig. 2a** shows a radial movement shape (cross-section variation) of potential hoop modes, from n=0 to n=4, n being defined by the half the number of vibrational nodes around the circumference, i.e. points which do not move. **Fig. 2b** shows an axial movement shape (varying amplitude of cross-section variation shown in Fig. 3 along the pipe length) of any hoop mode, with m=1 to m=4, m being defined by the number of radial vibration maxima along the system length. (the pipe "blows up" within each m section while vibrating).

**Fig. 3** shows schematically deformations caused by the first two bending modes of a pipe section. The pipe bends longitudinally without changing the cross-section while vibrating.

**Fig. 4** shows schematically an amplitude-frequency diagram 80 according to an embodiment. The amplitude-frequency diagram 80 is an example of a response or reaction on exciting the pipe-fluid system 10, e.g. by excitation means 40. Note that for determining a physical parameter of a fluid such an amplitude-frequency diagram 80 needs not necessarily be depicted, but only its properties may be used.

The amplitude-frequency diagram 80 depicts a first curve 81 and a second curve 82. The first curve 81 has first maxima M1a - M7a, with respective first frequencies f1a - f7a. The second curve 82 (with broken lines) has second maxima M1b - M7b, with respective second frequencies f1b - f7b. The first curve 81 is acquired, by the vibration measurement devices 50, as response of a first vibration of the section 14. The first curve 81 may have been acquired to get reference values for measurements. The second curve 82 is acquiring, by the same vibration measurement devices 50, as response of a second vibration of the section 14. The first curve 81 may be acquired, particularly on a regular basis, to get "productive values" of a current situation of the pipe-fluid system 10. Furthermore, Fig. 4 shows a computed Eigen-frequency range f_{target} of computed maxima (those maxima are not shown) of the pipe-fluid system 10, within which the frequency correlated to the envisaged physical property is expected. The computed Eigen-frequency range f_{target} may be result of a simulation, e.g. of an FEM-simulation, of the pipe-fluid system 10. Due to several frame-conditions, as explained above, the simulation has not a single Eigen-frequency as result, but a frequency range, i.e. an Eigen-frequency range f_{target}.

After acquiring, by the vibration measurement devices 50, the first maxima M1a - M7a of the first curve 81, the maxima M1a, M2a, M6a, M7a can be excluded from evaluation, because these maxima are outside the computed Eigen-frequency range f_{target}. Hence, a set of first maxima {M3a, M4a, M5a} remains. Then, a vibration mode analysis is conducted, e.g. using phase analysis of the at least two vibration measurement devices 50. As a result, it turns out that maxima M4a and M5a have the same phase. This means that M4a and M5a are bending mode maxima and, thus, are also excluded from evaluation. Consequently, a first hoop mode maximum M3a out of the set of first maxima {M3a, M4a, M5a} remains or is selected, with a frequency f3a, which can be used as reference frequency.

In the "productive phase", second maxima M1a - M7a, of the second curve 82, are acquired. Then, the maxima M1b, M2b, M6b, M7b are excluded from evaluation, because these maxima are out of the computed Eigen-frequency range f_{target}, thus leading to a remaining set of second maxima {M3b, M4b, M5b}. From this set of second maxima {M3b, M4b, M5b}, second hoop mode maximum M3b is selected, because it turns out - by means of a vibration mode analysis - that M3b is a hoop mode maximum, and the M4b and M5b are bending mode maxima. For deriving the physical parameter of the fluid, a difference between the first hoop mode maximum M3a and the second hoop mode maximum M3b is used.

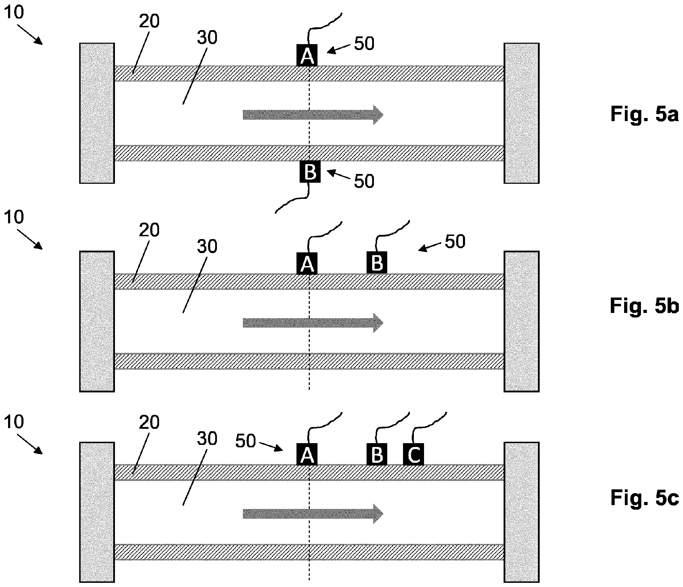

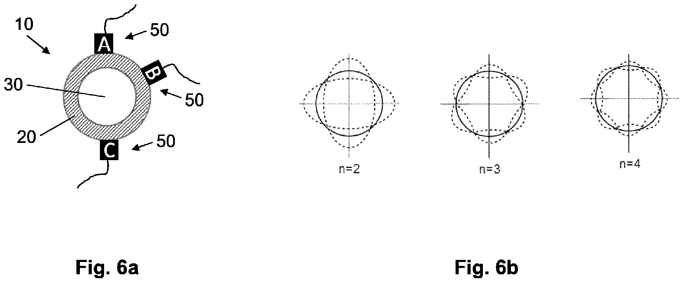

**Fig. 5a** to **5c** shows schematically pipe-fluid systems 10 with pipe 20, fluid 30 and at least two vibration measurement devices 50 - depicted as A, B (and, optionally, C) - according to an embodiment. In **Fig. 5a****,** two vibration measurement devices A and B are shown, arranged along one line radially circumferential to the pipe 20. Looking at **Fig. 3** or **Fig. 6b****,** it becomes clear that this arrangement fits well for detecting phases that indicate hoop mode. In **Fig. 5b****,** two vibration measurement devices A and B are shown, arranged at an outer surface of the pipe 20, along one line axially parallel to the pipe 20. In **Fig. 5c****,** two vibration measurement devices A and B are shown, arranged at an outer surface of the pipe 20, along one line axially parallel to the pipe 20.

**Fig. 6a** shows schematically a pipe-fluid system 10 with vibration measurement devices 50 (A, B, C) according to an embodiment. Particularly, three vibration measurement devices A, B and C are shown, arranged along one line radially circumferential to the pipe 20.

**Fig. 6b** show schematically hoop modes of a pipe-fluid system according to an embodiment, with n=1 to n=4. The phases of the bending modes and the hoop modes are clearly visible in **Fig. 2** or **Fig. 3****,** respectively.

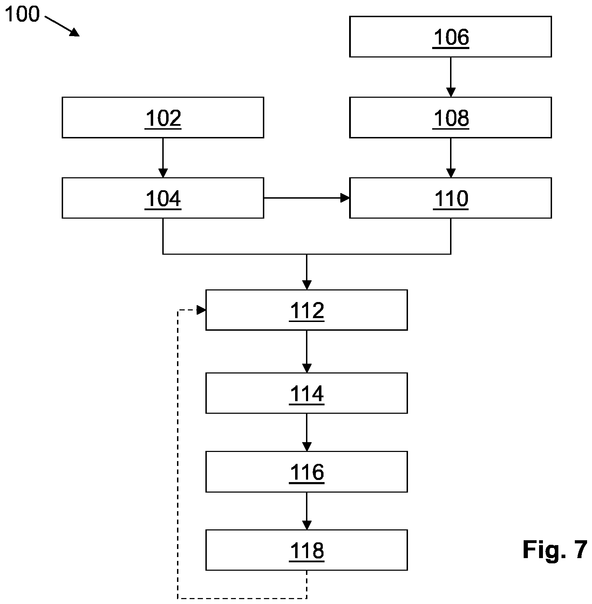

**Fig. 7** shows a flow diagram 100 depicting a method for determining a physical parameter of a fluid 30 in a section 14 of a pipe-fluid system 10 (see, e.g., **Fig. 1**) according to an embodiment. In a step 102, a section 14 of the pipe-fluid system 10 is selected, wherein the section 14 is delimited by a pair of stiff delimiters 11, 19. In a step 104, a numerical vibration simulation of the section 14 of the pipe 20 is performed, resulting in a computed Eigen-frequency range f_{target} of computed maxima of the pipe-fluid system 10. In a step 106, by an excitation means 40, a first vibration of the section 14 is induced. In a step 108, by at least two vibration measurement devices 50, a set of first maxima {M3a, M4a, M5a} (e.g. using an amplitude-frequency diagram 80, or at least its semantic) is acquired, with a first frequency f3a, f4a, f5a within the Eigen-frequency range f_{target}. In a step 110, by means of a vibration mode analysis, a first hoop mode maximum M3a out of the set of first maxima {M3a, M4a, M5a} is selected. In a step 112, by the excitation means 40, a second vibration of the section 14 is induced. In a step 114, by the at least two vibration measurement devices 50, a set of second maxima {M3b, M4b, M5b} is acquired, with a second frequency f3b, f4b, f5b within the Eigen-frequency range f_{target}. In a step 116, by means of vibration mode analysis, a second hoop mode maximum M3b out of the set of second maxima {M3b, M4b, M5b} is selected. In a step 118, the physical parameter of the fluid 30 are derived, from a difference between the first hoop mode maximum M3a and the second hoop mode maximum M3b.

### List of Reference Symbols

- 10: pipe-fluid system
- 11, 19: delimiters
- 14: section of the pipe
- 20: pipe
- 30: fluid
- 35: arrow
- 40: excitation means
- 50, A, B, C: vibration measurement device
- 60: evaluation device
- 70: vibration measurement system
- 80: amplitude-frequency diagram
- 81: first curve
- 82: second curve
- 100: flow diagram
- 102-118: steps
- M1a - M7a: first maxima
- M1b - M7b: second maxima
- f1a - f7a: first frequency
- f1b - f7b: second frequency

## Claims

1. A method for determining a physical parameter of a fluid (30) in a section (14) of a pipe-fluid system (10), wherein the pipe-fluid system (10) comprises a pipe (20) configured to be filled with the fluid (30), the method comprising the steps of:
selecting the section (14) of the pipe-fluid system (10), the section (14) being delimited by a pair of stiff delimiters (11, 19);
performing a numerical vibration simulation of the section (14) of the pipe (20), resulting in a computed Eigen-frequency range (f_{target}) of computed maxima of the pipe-fluid system (10);
inducing, by an excitation means (40), a first vibration of the section (14);
acquiring, by at least two vibration measurement devices (50), a set of first maxima (M3a, M4a, M5a) in an amplitude-frequency diagram (80), with a first frequency (f3a, f4a) within the computed Eigen-frequency range (f_{target});
selecting, by means of a vibration mode analysis, a first hoop mode maximum (M3a) out of the set of first maxima (M3a, M4a, M5a), the first hoop mode maximum (M3a) being a reference value;
inducing, by the excitation means (40), a second vibration of the section (14);
acquiring, by the at least two vibration measurement devices (50), a set of second maxima (M3b, M4b, M5b) in the amplitude-frequency diagram (80),
with a second frequency (f3b, f4b, f5b) within the computed Eigen-frequency range (f_{target});
selecting, by means of vibration mode analysis, a second hoop mode maximum (M3b) out of the set of second maxima (M3b, M4b, M5b), the second hoop mode maximum (M3b) being an indicator of the current state of the section of the pipe-fluid system; and
deriving the physical parameter of the fluid (30) from a difference between the first hoop mode maximum (M3a) and the second hoop mode maximum (M3b).

2. A method for determining a physical parameter of a fluid (30) in a section (14) of a pipe-fluid system (10), wherein the pipe-fluid system (10) comprises a pipe (20) configured to be filled with the fluid (30), the method comprising the steps of:
selecting the section (14) of the pipe-fluid system (10), the section (14) being delimited by a pair of stiff delimiters (11, 19);
performing a numerical vibration simulation of the section (14) of the pipe (20), resulting in a computed Eigen-frequency range (f_{target}) of computed maxima of the pipe-fluid system (10);
inducing, by an excitation means (40), a first vibration of the section (14);
acquiring, by at least two vibration measurement devices (50), a set of first maxima (M3a, M4a, M5a) in an amplitude-frequency diagram (80), with a first frequency (f3a, f4a) within the computed Eigen-frequency range (f_{target});
selecting, by means of a vibration mode analysis, a first bending mode maximum (M4a) out of the set of first maxima (M3a, M4a, M5a), the first bending mode maximum (M4a) being a reference value;
inducing, by the excitation means (40), a second vibration of the section (14);
acquiring, by the at least two vibration measurement devices (50), a set of second maxima (M3b, M4b, M5b) in the amplitude-frequency diagram (80), with a second frequency (f3b, f4b, f5b) within the computed Eigen-frequency range (f_{target}); and
selecting, by means of vibration mode analysis, a second bending mode maximum (M4b) out of the set of second maxima (M3b, M4b, M5b), the second bending mode maximum (M4b) being an indicator of the current state of the section of the pipe-fluid system; and
deriving the physical parameter of the fluid (30) from a difference between the first bending mode maximum (M4a) and the second bending mode maximum (M4b).

3. The method of claim 1 or 2,
wherein the physical parameter is a pressure, a viscosity, and/or a density and/or a flow of the fluid (30).

4. The method of any one of the preceding claims,
wherein the at least two vibration measurement devices (50) are arranged at an outer surface of the pipe (20), along one line axially parallel to the pipe (20), and/or along one line radially circumferential to the pipe (20).

5. The method of any one of the preceding claims,
wherein the at least two vibration measurement devices (50) are configured for the vibration mode analysis,
particularly for classifying a first or second maximum either as a bending mode maximum or as a hoop mode maximum.

6. The method of claim 5,
wherein the vibration mode analysis is achieved by comparing an amplitude and/or phase of the vibrations at the Eigen-frequencies within the set of first maxima (M3a, M4a, M5a) and/or within the set of second maxima (M3b, M4b, M5b).

7. The method of any one of the preceding claims,
wherein the pipe (20) comprises or consists of metal.

8. The method of any one of the preceding claims,
wherein the pipe (20) has a diameter between 2 cm and 150 cm, and/or has a wall thickness between 2 mm and 50 mm.

9. The method of any one of the preceding claims,
wherein the stiff delimiter (11, 19) is designed as a flange or a clamp.

10. The method of any one of the preceding claims,
wherein the excitation means (40) is designed as a hammer, a solenoid-driven coil, and/or further excitation means.

11. The method of any one of the preceding claims,
wherein the vibration measurement device (50) is at least one of:
an accelerometer, any kind of a microphone, an optical sensor, and/or a strain gauge.

12. A vibration measurement system (70) configured for determining a physical parameter of a fluid (30) in a pipe-fluid system (10), the vibration measurement system (70) comprising:
an excitation means (40), configured for inducing a vibration in a section (14) of the pipe-fluid system (10);
at least two vibration measurement devices (50), configured for acquiring), from the section (14) of the pipe-fluid system (10), first maxima (M3a, M4a, M5a) and second maxima (M3b, M4b, M5b) in an amplitude-frequency diagram (80); and
an evaluation device (60), configured for executing at least the steps of a method of claim 1 or 2 for determining the physical parameter of the fluid (30).

13. A computer program product comprising instructions, which, when the program is executed by an evaluation device (60) of the vibration measurement system (70) according to claim 12 cause the evaluation device (60) to carry out the method according to any one of claims 1 to 11.

14. A computer-readable storage medium where a computer program according to claim 13 is stored on.

15. Use of a vibration measurement system (70) according to claim 12 for determining a physical parameter of a fluid (30) in a pipe-fluid system (10), particularly for determining a pressure, a viscosity and/or a density of the fluid (30).

## Patentansprüche

1. Verfahren zum Bestimmen eines physikalischen Parameters eines Fluids (30) in einem Abschnitt (14) eines Rohr-Fluid-Systems (10), wobei das Rohr-Fluid-System (10) ein Rohr (20) umfasst, das dazu eingerichtet ist, mit dem Fluid (30) gefüllt zu werden, wobei das Verfahren die folgenden Schritte umfasst:
auswählen des Abschnitts (14) des Rohr-Fluid-Systems (10), wobei der Abschnitt (14) durch ein Paar von starren Begrenzern (11, 19) begrenzt wird;
durchführen einer numerischen Schwingungssimulation des Abschnitts (14) des Rohrs (20), die zu einem berechneten Eigenfrequenzbereich (f_{target}) von berechneten Maxima des Rohr-Fluid-Systems (10) führt;
erzeugen, durch ein Erregungsmittel (40), einer ersten Schwingung des Abschnitts (14);
erfassen, durch mindestens zwei Schwingungsmessgeräte (50), eines Satzes von ersten Maxima (M3a, M4a, M5a) in einem Amplituden-Frequenz-Diagramm (80) mit einer ersten Frequenz (f3a, f4a) innerhalb des berechneten Eigenfrequenzbereichs (f_{target});
auswählen, mittels einer Schwingungsmodenanalyse, eines ersten Ringmodenmaximums (M3a) aus dem Satz der ersten Maxima (M3a, M4a, M5a) wobei das erste Ringmodenmaximum (M3a) ein Referenzwert ist;
erzeugen, durch das Erregungsmittel (40), einer zweiten Schwingung des Abschnitts (14);
erfassen, durch die mindestens zwei Schwingungsmessgeräte (50), eines Satzes von zweiten Maxima (M3b, M4b, M5b) im Amplituden-Frequenz-Diagramm (80) mit einer zweiten Frequenz (f3b, f4b, f5b) innerhalb des berechneten Eigenfrequenzbereichs (f_{target});
auswählen, mittels Schwingungsmodenanalyse, eines zweiten Ringmodenmaximums (M3b) aus dem Satz zweiter Maxima (M3b, M4b, M5b), wobei das zweite Ringmodenmaximum (M3b) ein Indikator für den aktuellen Zustand des Abschnitts des Rohr-Fluid-Systems ist; und
ableiten des physikalischen Parameters des Fluids (30) aus einer Differenz zwischen dem ersten Ringmodenmaximum (M3a) und dem zweiten Ringmodenmaximum (M3b).

2. Verfahren zum Bestimmen eines physikalischen Parameters eines Fluids (30) in einem Abschnitt (14) eines Rohr-Fluid-Systems (10), wobei das Rohr-Fluid-System (10) ein Rohr (20) umfasst, das dazu bestimmt ist, mit dem Fluid (30) gefüllt zu werden, wobei das Verfahren die folgenden Schritte umfasst:
auswählen des Abschnitts (14) des Rohr-Fluid-Systems (10), wobei der Abschnitt (14) durch ein Paar von starren Begrenzern (11, 19) begrenzt wird;
durchführen einer numerischen Schwingungssimulation des Abschnitts (14) des Rohrs (20), die zu einem berechneten Eigenfrequenzbereich (f_{target}) von berechneten Maxima des Rohr-Fluid-Systems (10) führt;
erzeugen, durch ein Erregungsmittel (40), einer ersten Vibration des Abschnitts (14);
erfassen, durch mindestens zwei Schwingungsmessgeräte (50), eines Satzes von ersten Maxima (M3a, M4a, M5a) in einem Amplituden-Frequenz-Diagramm (80) mit einer ersten Frequenz (f3a, f4a) innerhalb des berechneten Eigenfrequenzbereichs (f_{target});
auswählen, mittels einer Schwingungsmodenanalyse, eines ersten Biegemodusmaximums (M4a) aus dem Satz der ersten Maxima (M3a, M4a, M5a), wobei das erste Biegemodusmaximum (M4a) ein Referenzwert ist;
erzeugen, durch das Erregungsmittel (40), einer zweiten Schwingung des Abschnitts (14);
erfassen, durch die mindestens zwei Schwingungsmessgeräte (50), eines Satzes von zweiten Maxima (M3b, M4b, M5b) im Amplituden-Frequenz-Diagramm (80) mit einer zweiten Frequenz (f3b, f4b, f5b) innerhalb des berechneten Eigenfrequenzbereichs (f_{target});
auswählen, mittels Schwingungsmodenanalyse, eines zweiten Biegemodenmaximums (M4b) aus dem Satz der zweiten Maxima (M3b, M4b, M5b, wobei das zweite Biegemodenmaximum (M4b) ein Indikator für den aktuellen Zustand des Abschnitts des Rohr-Fluid-Systems ist; und
ableiten des physikalischen Parameters des Fluids (30) aus einer Differenz zwischen dem ersten Biegemodenmaximum (M4a) und dem zweiten Biegemodenmaximum (M4b).

3. Verfahren nach Anspruch 1 oder 2,
wobei der physikalische Parameter ein Druck, eine Viskosität und/oder eine Dichte und/oder ein Fluss des Fluids (30) ist.

4. Verfahren nach einem der vorhergehenden Ansprüche,
wobei die mindestens zwei Schwingungsmessvorrichtungen (50) an einer Außenfläche des Rohrs (20), entlang einer Linie axial parallel zum Rohr (20) und/oder entlang einer Linie radial in Umfangsrichtung des Rohrs (20) angeordnet sind.

5. Verfahren nach einem der vorhergehenden Ansprüche,
wobei die mindestens zwei Schwingungsmessgeräte (50) für die Schwingungsmodenanalyse ausgelegt sind,
insbesondere zur Einstufung eines ersten oder zweiten Maximums entweder als Biegemodenmaximum oder als Ringmodenmaximum.

6. Verfahren nach Anspruch 5,
wobei die Schwingungsmodenanalyse durch den Vergleich einer Amplitude und/oder Phase der Schwingungen bei den Eigenfrequenzen innerhalb des Satzes von ersten Maxima (M3a, M4a, M5a) und/oder innerhalb des Satzes von zweiten Maxima (M3b, M4b, M5b) erreicht wird.

7. Verfahren nach einem der vorhergehenden Ansprüche,
wobei das Rohr (20) aus Metall umfasst oder daraus besteht.

8. Verfahren nach einem der vorhergehenden Ansprüche,
wobei das Rohr (20) einen Durchmesser zwischen 2 cm und 150 cm und/oder eine Wandstärke zwischen 2 mm und 50 mm hat.

9. Verfahren nach einem der vorhergehenden Ansprüche,
wobei der steife Begrenzer (11, 19) als Flansch oder als Klammer ausgebildet ist.

10. Verfahren nach einem der vorhergehenden Ansprüche,
wobei das Erregermittel (40) als Hammer, als elektromagnetisch betriebene Spule und/oder als weiteres Erregermittel ausgebildet ist.

11. Verfahren nach einem der vorhergehenden Ansprüche,
wobei die Vibrationsmessvorrichtung (50) mindestens eine der folgenden ist:
ein Beschleunigungsmesser, ein Mikrofon jeglicher Art, ein optischer Sensor und/oder ein Dehnungsmessstreifen.

12. Schwingungsmesssystem (70) zur Bestimmung eines physikalischen Parameters eines Fluids (30) in einem Rohr-Fluid-System (10), wobei das Schwingungsmesssystem (70) umfasst:
eine Erregungseinrichtung (40), die dazu eingerichtet ist, in einem Abschnitt (14) des Rohr-Fluid-Systems (10) eine Vibration hervorzurufen;
mindestens zwei Schwingungsmessvorrichtungen (50), die für die Erfassung von ersten Maxima (M3a, M4a, M5a) und zweiten Maxima (M3b, M4b, M5b) in einem Amplituden-Frequenz-Diagramm (80) von dem Abschnitt (14) des Rohr-Fluid-Systems (10) eingerichtet sind; und
eine Auswerteeinrichtung (60), die dazu eingerichtet ist, mindestens die Schritte eines Verfahrens nach Anspruch 1 oder 2 zur Bestimmung des physikalischen Parameters des Fluids (30) auszuführen.

13. Computerprogrammprodukt mit Anweisungen, die bei Ausführung des Programms durch eine Auswerteeinrichtung (60) des Schwingungsmesssystems (70) nach Anspruch 12 die Auswerteeinrichtung (60) veranlassen, das Verfahren nach einem der Ansprüche 1 bis 11 auszuführen.

14. Computerlesbares Speichermedium, auf dem ein Computerprogramm nach Anspruch 13 gespeichert ist.

15. Verwendung eines Schwingungsmesssystems (70) nach Anspruch 12 zur Bestimmung eines physikalischen Parameters eines Fluids (30) in einem Rohr-Fluid-System (10), insbesondere zur Bestimmung eines Drucks, einer Viskosität und/oder einer Dichte des Fluids (30).

## Revendications

1. Procédé de détermination d'un paramètre physique d'un fluide (30) dans une section (14) d'un système tuyauterie-fluide (10), le système tuyauterie-fluide (10) comprenant un tuyau (20) conçu pour être rempli avec le fluide (30), le procédé comprenant les étapes consistant à :
sélectionner la section (14) du système tuyauterie-fluide (10), la section (14) étant délimitée par une paire de délimiteurs rigides (11, 19) ;
effectuer une simulation de vibrations numérique de la section (14) du tuyau (20), ce qui donne une plage de fréquences propres calculée (f_{cible}) des maxima calculés du système tuyauterie-fluide (10) ;
induire, par un moyen d'excitation (40), une première vibration de la section (14) ;
acquérir, par au moins deux dispositifs de mesure de vibration (50), un ensemble de premiers maxima (M3a, M4a, M5a) dans un diagramme amplitude-fréquence (80), une première fréquence (f3a, f4a) étant dans la plage de fréquences propres calculée (f_{cible}) ;
sélectionner, au moyen d'une analyse de mode de vibration, un premier maximum de mode de cerclage (M3a) parmi l'ensemble de premiers maxima (M3a, M4a, M5a), le premier maximum de mode de cerclage (M3a) étant une valeur de référence ;
induire, par le moyen d'excitation (40), une seconde vibration de la section (14) ;
acquérir, par les au moins deux dispositifs de mesure de vibration (50), un ensemble de seconds maxima (M3b, M4b, M5b) dans le diagramme amplitude-fréquence (80), une seconde fréquence (f3b, f4b, f5b) étant dans la plage de fréquences propres calculée (f_{cible}) ;
sélectionner, au moyen d'une analyse de mode de vibration, un second maximum de mode de cerclage (M3b) parmi l'ensemble de seconds maxima (M3b, M4b, M5b), le second maximum de mode de cerclage (M3b) étant un indicateur de l'état actuel de la section du système tuyauterie-fluide ; et
déduire le paramètre physique du fluide (30) à partir d'une différence entre le premier maximum de mode de cerclage (M3a) et le second maximum de mode de cerclage (M3b) .

2. Procédé de détermination d'un paramètre physique d'un fluide (30) dans une section (14) d'un système tuyauterie-fluide (10), le système tuyauterie-fluide (10) comprenant un tuyau (20) conçu pour être rempli avec le fluide (30), le procédé comprenant les étapes consistant à :
sélectionner la section (14) du système tuyauterie-fluide (10), la section (14) étant délimitée par une paire de délimiteurs rigides (11, 19) ;
effectuer une simulation de vibrations numérique de la section (14) du tuyau (20), ce qui donne une plage de fréquences propres calculée (f_{cible}) des maxima calculés du système tuyauterie-fluide (10) ;
induire, par un moyen d'excitation (40), une première vibration de la section (14) ;
acquérir, par au moins deux dispositifs de mesure de vibration (50), un ensemble de premiers maxima (M3a, M4a, M5a) dans un diagramme amplitude-fréquence (80), une première fréquence (f3a, f4a) étant dans la plage de fréquences propres calculée (f_{cible}) ; sélectionner, au moyen d'une analyse de mode de vibration, un premier maximum de mode de flexion (M4a) parmi l'ensemble de premiers maxima (M3a, M4a, M5a), le premier maximum de mode de flexion (M4a) étant une valeur de référence ; induire, par le moyen d'excitation (40), une seconde vibration de la section (14) ;
acquérir, par les au moins deux dispositifs de mesure de vibration (50), un ensemble de seconds maxima (M3b, M4b, M5b) dans le diagramme amplitude-fréquence (80), une seconde fréquence (f3b, f4b, f5b) étant dans la plage de fréquences propres calculée (f_{cible}) ; et
sélectionner, au moyen d'une analyse de mode de vibration, un second maximum de mode de flexion (M4b) parmi l'ensemble de seconds maxima (M3b, M4b, M5b), le second maximum de mode de flexion (M4b) étant un indicateur de l'état actuel de la section du système tuyauterie-fluide ; et
déduire le paramètre physique du fluide (30) à partir d'une différence entre le premier maximum de mode de flexion (M4a) et le second maximum de mode de flexion (M4b) .

3. Procédé selon la revendication 1 ou 2,
le paramètre physique étant une pression, une viscosité, et/ou une densité et/ou un débit du fluide (30).

4. Procédé selon l'une quelconque des revendications précédentes,
les au moins deux dispositifs de mesure de vibration (50) étant disposés au niveau d'une surface extérieure du tuyau (20), le long d'une ligne axialement parallèle au tuyau (20), et/ou le long d'une ligne radialement circonférentielle au tuyau (20).

5. Procédé selon l'une quelconque des revendications précédentes,
les au moins deux dispositifs de mesure de vibration (50) étant conçus pour l'analyse de mode de vibration, notamment pour classer un premier ou un second maximum comme maximum de mode de flexion ou comme maximum de mode de cerclage.

6. Procédé selon la revendication 5,
l'analyse de mode de vibration étant réalisée en comparant l'amplitude et/ou la phase des vibrations aux fréquences propres dans l'ensemble de premiers maxima (M3a, M4a, M5a) et/ou dans l'ensemble de seconds maxima (M3b, M4b, M5b).

7. Procédé selon l'une quelconque des revendications précédentes,
le tuyau (20) comprenant ou étant constitué de métal.

8. Procédé selon l'une quelconque des revendications précédentes,
le tuyau (20) ayant un diamètre compris entre 2 cm et 150 cm, et/ou ayant une épaisseur de paroi comprise entre 2 mm et 50 mm.

9. Procédé selon l'une quelconque des revendications précédentes,
le délimiteur rigide (11, 19) étant conçu comme une bride ou un collier.

10. Procédé selon l'une quelconque des revendications précédentes,
le moyen d'excitation (40) étant conçu comme un marteau, une bobine entraînée par solénoïde et/ou un autre moyen d'excitation.

11. Procédé selon l'une quelconque des revendications précédentes,
le dispositif de mesure de vibration (50) étant au moins l'un parmi :
un accéléromètre, un microphone quelconque, un capteur optique et/ou une jauge de contrainte.

12. Système de mesure de vibration (70) conçu pour déterminer un paramètre physique d'un fluide (30) dans un système tuyauterie-fluide (10), le système de mesure de vibration (70) comprenant :
un moyen d'excitation (40), conçu pour induire une vibration dans une section (14) du système tuyauterie-fluide (10) ;
au moins deux dispositifs de mesure de vibration (50), conçus pour acquérir, à partir de la section (14) du système tuyauterie-fluide (10), de premiers maxima (M3a, M4a, M5a) et de seconds maxima (M3b, M4b, M5b) dans un diagramme amplitude-fréquence (80) ; et
un dispositif d'évaluation (60), conçu pour exécuter au moins les étapes d'un procédé selon la revendication 1 ou 2 pour déterminer le paramètre physique du fluide (30) .

13. Produit-programme informatique comprenant des instructions qui, lorsque le programme est exécuté par un dispositif d'évaluation (60) du système de mesure de vibration (70) selon la revendication 12, amènent le dispositif d'évaluation (60) à effectuer le procédé selon l'une quelconque des revendications 1 à 11.

14. Support d'informations lisible par ordinateur sur lequel est stocké un programme informatique selon la revendication 13.

15. Utilisation d'un système de mesure de vibration (70) selon la revendication 12 pour déterminer un paramètre physique d'un fluide (30) dans un système tuyauterie-fluide (10), notamment pour déterminer une pression, une viscosité et/ou une densité du fluide (30).
